# EUROPEAN PATENT APPLICATION

(11) **EP 4 657 772 A1**
(43) Date of publication of application: **03.12.2025**
(21) Application number: 23935093.7
(22) Date of filing: 04.12.2023
(51) Int. Cl.: H04B 10/25, H04J 14/02, G02B 6/42, H04Q 1/04, H05K 1/03

(54) **WAVELENGTH SELECTIVE SWITCH, RACK AND OPTICAL TRANSMISSION DEVICE**

(30) Priority: 24.04.2023 CN 202310472356
(71) Applicant: Huawei Technologies Co., Ltd., Shenzhen, Guangdong 518129 (CN)
(72) Inventor: QUAN, Mingran, Shenzhen, Guangdong 518129 (CN); LV, Haifeng, Shenzhen, Guangdong 518129 (CN); XIAO, Xinhua, Shenzhen, Guangdong 518129 (CN); ZHAO, Junying, Shenzhen, Guangdong 518129 (CN)
(74) Representative: Gill Jennings & Every LLP
(86) International application number: PCT/CN2023/136059
(87) International publication number: WO 2024/221926

(57) **Abstract**

A wavelength selective switch (30), a rack (11), and an optical transmission device are disclosed, to improve efficiency of removing/installing the wavelength selective switch (30) from/onto the optical transmission device. The wavelength selective switch (30) includes an electrical interface (31) connected to an optical cross-connector (33) through a circuit and disposed on a first plane of a backplane (34). After the wavelength selective switch (30) is installed onto the rack (11), the electrical interface (31) is connected to a first electrical interface (91). The first electrical interface (91) is included in the rack (11). An optical interface (32) is connected to the optical cross-connector (33) through an optical fiber. The optical interface (32) is disposed on at least one of the first plane and a third plane. After the wavelength selective switch (30) is installed onto the rack (11), the third plane is on a surface of the rack (11). When the wavelength selective switch (30) is being installed onto the rack (11), a direction of a motion trajectory of the wavelength selective switch (30) is perpendicular to the third plane. In this way, the wavelength selective switch (30) can be removed/installed without being affected by other parts in a first device, to improve efficiency of removing/installing the wavelength selective switch (30) from/onto the rack (11) and reduce difficulty in removing/installing the wavelength selective switch (30) from/onto the rack (11).

## Description

This application claims priority to Chinese Patent Application No. 202310472356.4, filed with the China National Intellectual Property Administration on April 24, 2023 and entitled "WAVELENGTH SELECTIVE SWITCH, RACK, AND OPTICAL TRANSMISSION DEVICE", which is incorporated herein by reference in its entirety.

### TECHNICAL FIELD

Embodiments of this application relate to the field of optical networks, and in particular, to a wavelength selective switch, a rack, and an optical transmission device.

### BACKGROUND

As an all-optical network (all-optical network, AON) continuously evolves, backbone network fiberization, transmission network fiberization, and access network fiberization are successively promoted. To further simplify a connection between optical network devices, operators further introduce an optical switching function to transmission nodes, that is, introduce a reconfigurable optical add-drop multiplexer (reconfigurable optical add-drop multiplexer, ROADM) and an optical cross-connect (optical cross-connect, OXC) device.

As a representative of optical transmission devices, the OXC device is widely used on the transmission nodes of the operators due to its high network switching efficiency and powerful network extension capability. A wavelength selection function provided by the OXC device for an optical network architecture is provided by a wavelength selective switch (wavelength selective switch, WSS) disposed in the optical transmission device. The WWS is disposed on a board of the optical transmission device. To improve a capability of the optical transmission device to carry the board, the board of the optical transmission device is installed onto a rack of the optical transmission device by pushing it in.

The WSS is usually screwed to a surface of the board of the optical transmission device. In addition, an included angle between a motion trajectory along which the WSS is removed from the board of the optical transmission device and a motion trajectory along which the board of the optical transmission device is removed from the optical transmission device is 90 degrees. In other words, the WSS can be removed from the board of the optical transmission device only when the board of the optical transmission device is pulled out. The WSS also needs to be connected to an optical interface of the optical transmission device through an optical fiber and to an electrical interface of the optical transmission device through a cable. When a WSS module needs to be replaced or overhauled, there is a need to remove the entire board on which the WSS module is disposed and disconnect all cables of the board. After the WSS is replaced or overhauled, all cables of the board are reconnected and the board is reinstalled onto the rack of the optical transmission device. Consequently, efficiency of technical personnel in replacing or overhauling the WSS module is low.

### SUMMARY

Embodiments of this application provide a wavelength selective switch, a rack, and an optical transmission device, to improve efficiency of removing/installing the WSS from/onto the optical transmission device.

A first aspect of this application provides a wavelength selective switch, including an electrical interface, an optical interface, and an optical cross-connector. The electrical interface is connected to the optical cross-connector through a circuit. The electrical interface is disposed on a first plane of a backplane. The electrical interface is configured to provide electric energy for the optical cross-connector. After the wavelength selective switch is installed onto a rack, the electrical interface is connected to a second plane. The second plane is an electric energy output plane of the rack. The optical interface is connected to the optical cross-connector through an optical fiber. The optical interface is disposed on at least one of the first plane and a third plane. After the WSS is installed onto the rack, the third plane is on a surface of the rack. When the WSS is being installed onto the rack, a direction of a motion trajectory of the WSS is perpendicular to the third plane.

In embodiments of this application, the WSS includes the electrical interface, the optical interface, and the optical cross-connector. The electrical interface is connected to the optical cross-connector through the circuit. The electrical interface is disposed on the first plane of the backplane. After the WSS is installed onto the rack, the electrical interface is connected to the second plane. The second plane is the electric energy output plane of the rack. The optical interface is connected to the optical cross-connector through the optical fiber. The optical interface is disposed on at least one of the first plane and the third plane. After the WSS is installed onto the rack, the third plane is on the surface of the rack. When the WSS is being installed onto the rack, the direction of the motion trajectory of the WSS is perpendicular to the third plane. After the WSS is installed onto the rack, the third plane is on the surface of the rack. When the WSS is being installed onto the rack, the direction of the motion trajectory of the WSS is perpendicular to the third plane. In this way, the WSS can be removed/installed without being affected by other parts in a first device, to improve efficiency of removing/installing the WSS from/onto the rack and reduce difficulty in removing/installing the WSS from/onto the rack.

In a possible implementation of the first aspect, the first plane is not adjacent to the third plane. In embodiments of this application, the first plane is not adjacent to the third plane. The electrical interface and the optical interface that are disposed on the first plane may be connected to the rack through insertion and removal, and there are a plurality of optical/electrical interfaces for selection, to improve flexibility of the solution.

In a possible implementation of the first aspect, the optical interface includes a first optical interface and a second optical interface. The first optical interface is connected to the optical cross-connector through an optical fiber. The second optical interface is connected to the optical cross-connector through an optical fiber. In embodiments of this application, the optical interface includes the first optical interface and the second optical interface. The first optical interface is connected to the optical cross-connector through the optical fiber. The second interface is connected to the optical cross-connector through the optical fiber. The WSS may include a plurality of optical interfaces, to implement a plurality of optical paths of the WSS for light transmission and improve the flexibility of the solution.

In a possible implementation of the first aspect, the first optical interface is disposed on the third plane, and the second optical interface is disposed on the first plane. In embodiments of this application, the first optical interface is disposed on the third plane, and the second optical interface is disposed on the first plane. The first optical interface is disposed on the third plane, and the second optical interface is disposed on the first plane, so that an optical interface of the rack is open to the outside, to improve function flexibility after the WSS is combined with the rack.

In a possible implementation of the first aspect, the first optical interface is further connected to the second optical interface through an optical path. In embodiments of this application, the first optical interface is further connected to the second optical interface through the optical path, to provide a lossless optical channel between the plurality of optical interfaces and improve the flexibility of the solution.

In a possible implementation of the first aspect, the optical cross-connector includes at least one of a lens, an optical switching element, and an optical dispersion element.

A second aspect of this application provides a rack, including a first electrical interface. When a wavelength selective switch WSS is being installed onto the rack, a direction of a motion trajectory of the WSS is perpendicular to a third plane. The third plane is a plane of the WSS. After the WSS is installed onto the rack, the third plane is on a surface of the rack, and the first electrical interface is connected to an electrical interface. The first electrical interface supplies power to the WSS through the electrical interface. The electrical interface is included in the WSS.

In embodiments of this application, the rack includes the first electrical interface. When the WSS is being installed onto the rack, the direction of the motion trajectory of the WSS is perpendicular to the third plane. The third plane is the plane of the WSS. After the WSS is installed onto the rack, the third plane is on the surface of the rack, and the first electrical interface is connected to the electrical interface. The first electrical interface supplies power to the WSS through the electrical interface. The electrical interface is included in the WSS. The direction of the motion trajectory of the WSS is perpendicular to the third plane when the WSS is being installed onto the rack, and the third plane is on the surface of the rack after the WSS is installed onto the rack. Therefore, the WSS can be removed/installed from/onto the rack without being affected by another component, to improve efficiency of removing/installing the WSS from/onto the rack and reduce difficulty in removing/installing the WSS from/onto the rack.

In a possible implementation of the second aspect, the rack further includes a third optical interface. The third optical interface is disposed on a second plane. The first electrical interface is disposed on the second plane. The third optical interface is connected to an optical interface of the WSS and is configured to implement optical switching with the WSS.

A third aspect of this application provides an optical transmission device, including a wavelength selective switch WSS and a rack.

The WSS includes an electrical interface. The electrical interface is disposed on a first plane of the WSS.

The rack includes a first electrical interface. The electrical interface is disposed on a second plane. The second plane is a power supply plane of the rack.

The electrical interface is connected to the first electrical interface. The rack provides electric energy for the WSS through the first electrical interface. A third plane is on a surface of the rack. The third plane is included in the WSS.

When the WSS is being installed onto the rack, a direction of a motion trajectory of the WSS is perpendicular to the third plane.

In a possible implementation of the third aspect, the WSS further includes an optical interface and an optical cross-connector.

The electrical interface is connected to the optical cross-connector through a circuit.

The optical interface is connected to the optical cross-connector through an optical fiber. The optical interface is disposed on at least one of the first plane and the third plane.

In a possible implementation of the third aspect, the rack further includes a third optical interface. The third optical interface is disposed on the second plane of the rack.

The optical interface is connected to the third optical interface. The rack implements optical switching with the WSS through the third optical interface.

In a possible implementation of the third aspect, the optical interface includes a first optical interface and a second optical interface. The first optical interface is connected to the optical cross-connector through an optical fiber. The second optical interface is connected to the optical cross-connector through an optical fiber.

In a possible implementation of the third aspect, the first optical interface is disposed on the third plane, and the second optical interface is disposed on the first plane.

In a possible implementation of the third aspect, the rack further includes a third optical interface. The third optical interface is disposed on the second plane of the rack.

The first optical interface is connected to the third optical interface. The rack implements optical switching with the WSS through the third optical interface.

In a possible implementation of the third aspect, the electrical interface is disposed on the first plane of the WSS. The first plane is not adjacent to the third plane.

In a possible implementation of the third aspect, the optical cross-connector includes at least one of a lens, an optical switching element, and an optical dispersion element.

### BRIEF DESCRIPTION OF DRAWINGS

FIG. 1 is a diagram of a structure of an optical transmission device according to an embodiment of this application;
FIG. 2 is a diagram of a motion trajectory along which a WSS is removed according to an embodiment of this application;
FIG. 3 is a diagram of a structure of a WSS according to an embodiment of this application;
FIG. 4a is a diagram of another structure of a WSS according to an embodiment of this application;
FIG. 4b is a diagram of another structure of a WSS 30 according to an embodiment of this application;
FIG. 4c is a diagram of a structure of an optical cross-connector according to an embodiment of this application;
FIG. 5 is a diagram of another structure of a WSS according to an embodiment of this application;
FIG. 6 is a diagram of another structure of a WSS according to an embodiment of this application;
FIG. 7 is a diagram of another structure of a WSS according to an embodiment of this application;
FIG. 8a is a diagram of another structure of a WSS according to an embodiment of this application;
FIG. 8b is a diagram of another structure of a WSS according to an embodiment of this application;
FIG. 8c is a diagram of another structure of a WSS according to an embodiment of this application;
FIG. 9 is a diagram of a structure of a rack according to an embodiment of this application;
FIG. 10 is a diagram of another structure of a rack according to an embodiment of this application;
FIG. 11 is a diagram of a structure of an optical transmission device according to an embodiment of this application; and
FIG. 12 is a diagram of another structure of an optical transmission device according to an embodiment of this application.

### DESCRIPTION OF EMBODIMENTS

The following describes embodiments of this application with reference to the accompanying drawings in embodiments of this application. Terms used in implementations of this application are merely used to explain specific embodiments of this application, but are not intended to limit this application. A person of ordinary skill in the art may learn that, with development of technologies and emergence of a new scenario, the technical solutions provided in embodiments of this application are also applicable to a similar technical problem.

In the specification, claims, and accompanying drawings of this application, the terms "first", "second", and the like are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "contain", and any other variants mean to cover the non-exclusive inclusion, so that a process, method, system, product, or device that includes a series of units is not necessarily limited to those units, but may include other units not expressly listed or inherent to such a process, method, product, or device.

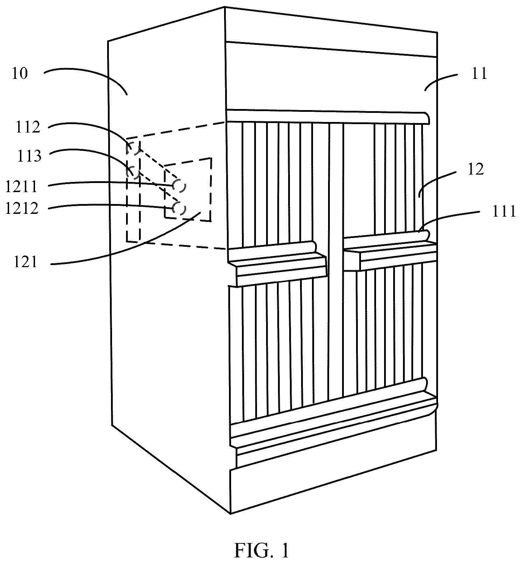

To facilitate understanding of the solution, an application scenario of this application is first described. FIG. 1 is a diagram of a structure of an optical transmission device according to an embodiment of this application.

An optical transmission device 10 includes a rack 11 and a board 12.

The rack 11 includes a plurality of valid slots 111. The board 12 may be installed onto the valid slot 111 of the rack 11 by pushing it in.

The rack 11 further includes an electrical interface A112 and an optical interface A113. The board 12 further includes a WSS 121. The WSS 121 is screwed to a surface of the board 12. The WSS 121 includes an electrical interface B1211 and an optical interface B1212. The electrical interface A112 is electrically connected to the electrical interface B1211. The optical interface A113 is optically connected to the optical interface B1212.

The electrical interface A112 is configured to provide electric energy for the WSS 121. The optical interface A113 is configured to provide propagation paths for incident light and emergent light of the WWS 121.

In the structure shown in FIG. 1, to overhaul the WSS 121, there is a need to remove the board 12 from the valid slot 111 of the rack 11, disconnect the electrical interface A112 from the electrical interface B1211 and the optical interface A113 from the optical interface B1212, and unscrew the WSS 121 is from the board, so that the WSS 121 can be overhauled.

Therefore, when a WSS is disposed in an optical transmission device as shown in FIG. 1, to overhaul the WSS, there is a need to remove a board on which the WSS is located from a rack, and close a circuit connection and an optical path connection between the WSS and the rack, so that the WSS can be overhauled. During actual application, when the WSS of the optical transmission device in an equipment room needs to be overhauled, technical personnel needs to spend a lot of time and effort removing the WSS from the rack. Consequently, the board cannot normally work for a period of time during removal and installation, resulting in work interruption of the optical transmission device. How to reduce work interruption duration of the optical transmission device is currently an urgent problem to be resolved.

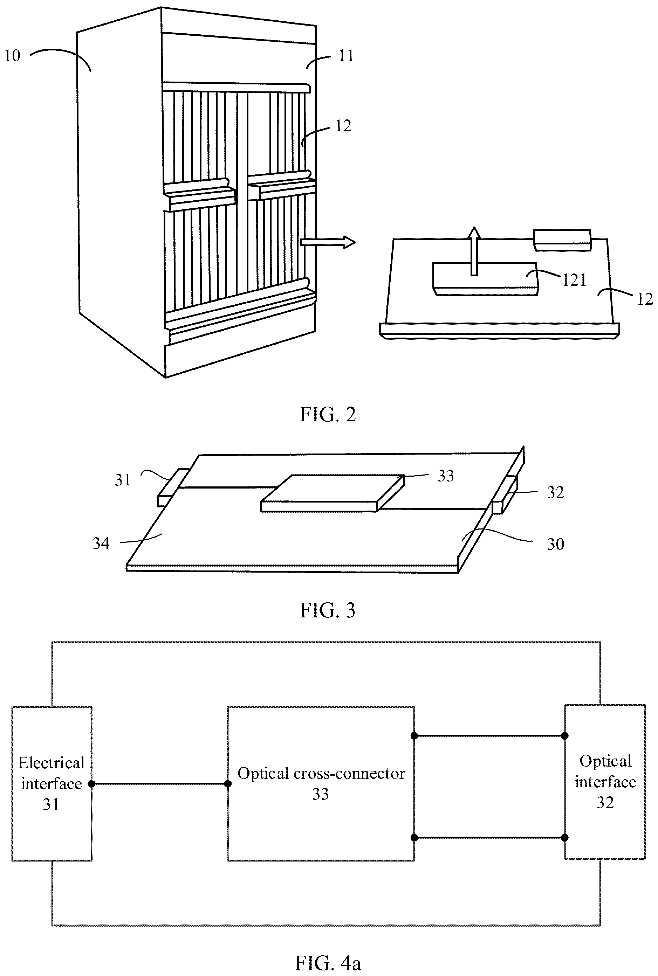

Based on the foregoing problem, this application proposes the following: In a current optical transmission device, a WSS is fastened to a surface of a board with a screw. FIG. 2 is a diagram of a motion trajectory along which a WSS is removed according to an embodiment of this application. It can be learned from FIG. 2 that a first removal direction is a direction of a motion trajectory along which a board is removed from a rack, a second removal direction is a direction of a motion trajectory along which a WSS is removed from the board, and an included angle between the first removal direction and the second removal direction is 90°. Therefore, it is difficult to remove the WSS from an optical transmission device without removing the board from the rack. In view of this situation, this application proposes that a removal/installation direction of the WSS may be changed, so that the first removal direction coincides with the second removal direction, to simplify operations that need to be performed when the WSS is being removed from and installed onto the optical transmission device.

For ease of understanding, a case in which a WSS provided in this application is installed onto a rack is described herein. All descriptions of the rack in the following may be understood as a rack.

Embodiments of this application provide a WSS. For its specific form, refer to FIG. 3. FIG. 3 is a diagram of a structure of a WSS according to an embodiment of this application.

A WSS 30 includes an electrical interface 31, an optical interface 32, and an optical cross-connector 33.

The electrical interface 31 is connected to the optical cross-connector 33 through a circuit. The electrical interface 31 is disposed on a first plane of a backplane 34. The electrical interface 31 is configured to provide electric energy for the optical cross-connector 33. After the WSS 30 is installed onto a rack, the electrical interface 31 is connected to a second plane. The second plane is an electric energy output plane of the rack. The rack provides electric energy for the WSS 30 through the second plane.

The optical interface 32 is connected to the optical cross-connector 33 through an optical fiber. The optical interface 32 is disposed on a third plane of the backplane 34. After the WSS 30 is installed onto the rack, the third plane is on a surface of the rack.

It can be learned from FIG. 3 that the backplane 34 is a cuboid, and the third plane is not adjacent to the first plane.

In a process of installing the WSS 30 shown in FIG. 3 into the rack, the WSS 30 is removed/inserted from/onto a valid slot of the rack in a direction perpendicular to the third plane, so that the WSS 30 can be quickly removed/installed. There is no need for circuit disconnection and a multi-step operation during removal and installation, to greatly improve efficiency of technical personnel in replacing or overhauling the WSS 30.

In embodiments of this application, the electrical interface 31 of the WSS 30 is disposed on the first plane of the backplane 34, and the optical interface 32 is disposed on the third plane of the backplane 34. The first plane is not adjacent to the third plane. After the WSS 30 is installed onto the rack, the third plane is on the surface of the rack. A direction of a motion trajectory along which the WSS 30 is removed/installed from/onto the rack is perpendicular to the third plane, so that the WSS 30 can be removed/installed from/onto the rack without being affected by another structure. In addition, in the process of installing the WSS 30 into the rack, the electrical interface 31 is directly connected to a power supply plane of the rack through direct insertion and removal. Plug-and-play and no additional circuit connection operation implement quick removal/installation of the WSS 30. There is no need for circuit disconnection and connection and other operation steps during removal and installation, to greatly improve efficiency of removing/installing the WSS 30. In addition, plug-and-play and no need for circuit connection reduce difficulty in using the WSS 30.

The description herein of relative positions of the electrical interface 31 and the optical interface 32 is merely an example. During actual application, the electrical interface 31 and the optical interface 32 may alternatively be on a same plane or adjacent planes. This is not limited herein.

There are a plurality of possible manners of connecting the electrical interface 31 and the optical interface 32 to the optical cross-connector 33 in the WSS 30. The following briefly describes possible cases. FIG. 4a is a diagram of another structure of a WSS according to an embodiment of this application.

It can be learned from FIG. 4a that the electrical interface 31 is directly connected to the optical cross-connector 33 through a circuit, and the optical interface 32 is connected to the optical cross-connector 33 through two optical fibers. The two optical fibers between the optical interface 32 and the optical cross-connector 33 are respectively configured to transmit light from the optical interface 32 to the optical cross-connector 33 for processing and transmit light processed by the optical cross-connector 33 to the optical interface 32.

In a specific application scenario, the two optical fibers between the optical interface 32 and the optical cross-connector 33 include a wavelength division multiplexing link for transmitting multi-wavelength multiplexed light and an add/drop link for transmitting single-wavelength light.

It may be understood that the description herein of types of the light transmitted by the two optical fibers between the optical interface 32 and the optical cross-connector 33 and a quantity of optical fibers between the optical interface 32 and the optical cross-connector 33 is merely an example. In a specific use scenario, there may be two or more optical fibers between the optical interface 32 and the optical cross-connector 33. These should be set with reference to a specific requirement in a specific case and are not limited herein.

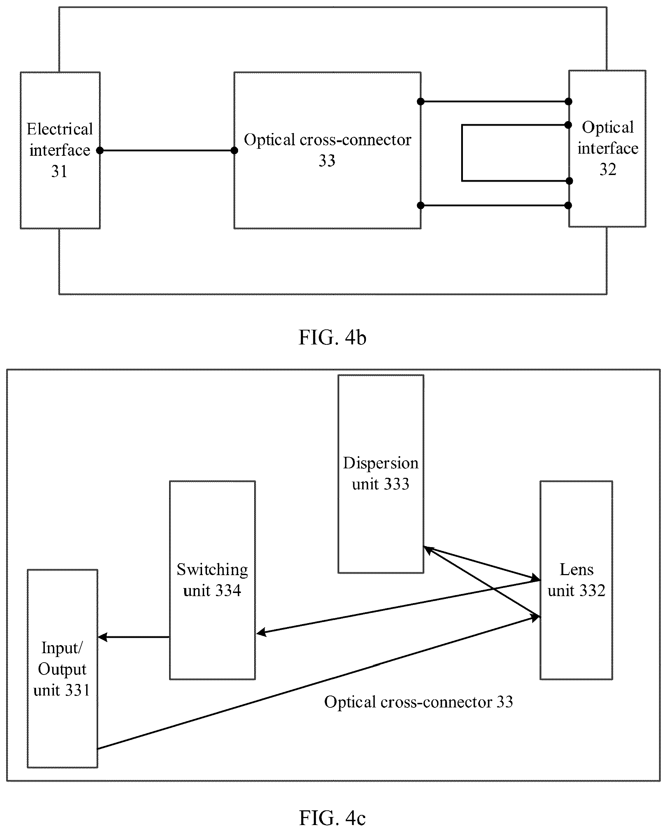

Alternatively, a manner of connecting the electrical interface 31 and the optical interface 32 to the optical cross-connector 33 in the WSS 30 may be as shown in FIG. 4b. FIG. 4b is a diagram of another structure of a WSS 30 according to an embodiment of this application.

It can be learned from FIG. 4b that the electrical interface 31 is directly connected to the optical cross-connector 33 through a circuit, and the optical interface 32 is connected to the optical cross-connector 33 through two optical fibers. The two optical fibers between the optical interface 32 and the optical cross-connector 33 are respectively configured to transmit light from the optical interface 32 to the optical cross-connector 33 for processing and transmit light processed by the optical cross-connector 33 to the optical interface 32. In addition, the optical interface 32 may be provided with a self-loop connection formed by an optical fiber.

In a specific application scenario, the two optical fibers between the optical interface 32 and the optical cross-connector 33 may respectively serve as a wavelength division multiplexing link for transmitting multi-wavelength multiplexed light and an add/drop link for transmitting single-wavelength light.

It may be understood that the description herein of types of the light transmitted by the two optical fibers between the optical interface 32 and the optical cross-connector 33 and a quantity of optical fibers between the optical interface 32 and the optical cross-connector 33 is merely an example. In a specific use scenario, there may be two or more optical fibers between the optical interface 32 and the optical cross-connector 33. These should be set with reference to a specific requirement in a specific case and are not limited herein.

Optionally, the optical cross-connector 33 may include at least one of a lens, an optical switching element, and an optical dispersion element. This should be set with reference to a specific application scenario during actual application and is not limited herein.

A composition structure of the optical cross-connector 33 is briefly described. FIG. 4c is a diagram of a structure of an optical cross-connector according to an embodiment of this application.

The optical cross-connector 33 includes an input/output unit 331, a lens unit 332, a dispersion unit 333, and a switching unit 334.

The input/output unit 331 is connected to the lens unit 332 and the switching unit 334 through optical paths, and is configured to be connected to the optical interface 32 through an optical fiber.

The lens unit 332 is connected to the dispersion unit 333 and the switching unit 334 through optical paths, and is configured to perform dispersion compensation, collimation, or switching on the optical paths.

The dispersion unit 333 is configured to spatially separate wavelength-division-multiplexed light. The dispersion unit 333 may be a grating. This is not limited herein.

The switching unit 334 is configured to deflect light, and transmit light processed by the lens unit 332 to the input/output unit 331. The switching unit 334 may be an LCOS, an MEMS, an LC, or the like. This is not limited herein.

It may be understood that the description herein of the composition structure of the optical cross-connector 33 is merely an example. During actual application, a quantity of functional unit types in the optical cross-connector 33 may be greater than or less than that shown in the figure, and its specific arrangement manner may be different from that in FIG. 4c. These should be set with reference to a specific application scenario during actual application and are not limited herein.

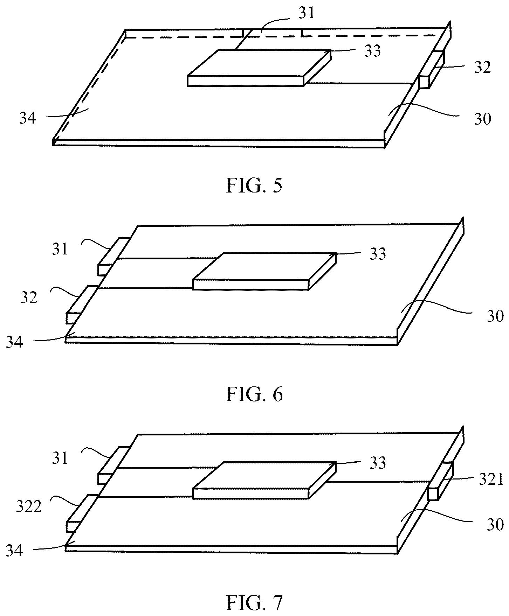

Optionally, alternatively, the third plane may be adjacent to the first plane. FIG. 5 is a diagram of another structure of a WSS according to an embodiment of this application.

A WSS 30 includes an electrical interface 31, an optical interface 32, and an optical cross-connector 33.

The electrical interface 31 is connected to the optical cross-connector 33 through a circuit. The electrical interface 31 is disposed on a first plane of a backplane 34. The electrical interface 31 is configured to provide electric energy for the optical cross-connector 33. After the WSS 30 is installed onto a rack, the electrical interface 31 is connected to a second plane. The second plane is an electric energy output plane of the rack. The rack provides electric energy for the WSS 30 through the second plane.

The optical interface 32 is connected to the optical cross-connector 33 through an optical fiber. The optical interface 32 is disposed on a third plane of the backplane 34. After the WSS 30 is installed onto the rack, the third plane is on a surface of the rack.

It can be learned from FIG. 5 that the backplane 34 is a cuboid, and the third plane is adjacent to the first plane. The electrical interface 31 is an electrically conductive elastic structure. The second plane is an electrically conductive plane. After the WSS 30 is installed onto the rack, a top of the elastic structure of the electrical interface 31 is connected to the second plane. The rack provides electric energy for the WSS 30 through the second plane.

It may be understood that to prolong a service life of the WSS, in a process of connecting the electrical interface 31 to the second plane, apart from connecting the electrical interface 31 to the second plane through elasticity of the elastic structure, a low-loss connection between the electrical interface 31 and the second plane may be implemented through a linkage mechanism or another mechanical structure. This is not limited herein.

It should be noted that a connection relationship between the optical interface 32 and the optical cross-connector 33 in FIG. 5 may be similar to that in FIG. 4a or FIG. 4b, and a composition of the optical cross-connector 33 may be similar to that in FIG. 4c. Details are not described herein again.

In embodiments of this application, the electrical interface 31 of the WSS 30 is disposed on the first plane of the backplane 34, the optical interface 32 is disposed on the third plane of the backplane 34, and the first plane is adjacent to the third plane. After the WSS 30 is installed onto the rack, the third plane is on the surface of the rack. The electrical interface 31 is an electrically conductive elastic structure. After the WSS 30 is installed onto the rack, the electrical interface 31 is connected to the second plane. The second plane is a power supply plane of the rack. The electrically conductive elastic structure is used as the electrical interface 31, so that the rack supplies power to the WSS 30. A direction of a motion trajectory along which the WSS 30 is removed/installed from/onto the rack is perpendicular to the third plane, so that the WSS 30 can be removed/installed from/onto the rack without being affected by another structure. In addition, in a process of installing the WSS 30 into the rack, the electrically conductive elastic structure is used as the electrical interface 31, so that the electrical interface 31 is directly connected to the power supply plane of the rack. Plug-and-play and no additional circuit connection operation implement quick removal/installation of the WSS 30. There is no need for circuit disconnection and connection and other operation steps during removal and installation, to greatly improve efficiency of removing/installing the WSS 30. In addition, plug-and-play and no need for circuit connection reduce difficulty in using the WSS 30.

In some possible application scenarios, both the electrical interface 31 and the optical interface 32 may be on the first plane. For a specific deployment, refer to FIG. 6. FIG. 6 is a diagram of another structure of a WSS according to an embodiment of this application.

A WSS 30 includes an electrical interface 31, an optical interface 32, and an optical cross-connector 33.

The electrical interface 31 is connected to the optical cross-connector 33 through a circuit. The electrical interface 31 is disposed on a first plane of a backplane 34. The electrical interface 31 is configured to provide electric energy for the optical cross-connector 33. After the WSS 30 is installed onto a rack, the electrical interface 31 is connected to a second plane. The second plane is an electric energy output plane of the rack. The rack provides electric energy for the WSS 30 through the second plane.

The optical interface 32 is connected to the optical cross-connector 33 through an optical fiber. The optical interface 32 is disposed on the first plane of the backplane 34.

It can be learned from FIG. 6 that the backplane 34 is a cuboid. After the WSS 30 is installed onto the rack, the third plane of the backplane 34 is on a surface of the rack.

In a process of installing the WSS 30 shown in FIG. 6 into the rack, the WSS 30 is removed/inserted from/onto a valid slot of the rack in a direction perpendicular to the third plane, so that the WSS 30 can be quickly removed/installed. There is no need for circuit disconnection and connection and a multi-step operation during removal and installation, to greatly improve efficiency of technical personnel in replacing or overhauling the WSS 30.

It may be understood that the first plane described in FIG. 6 may be adjacent to the third plane, or may not be adjacent to the third plane. This is not limited herein, and should be set with reference to a requirement of a specific application scenario.

It should be noted that a connection relationship between the optical interface 32 and the optical cross-connector 33 in FIG. 6 may be similar to that in FIG. 4a or FIG. 4b, and a composition of the optical cross-connector 33 may be similar to that in FIG. 4c. Details are not described herein again.

In embodiments of this application, both the electrical interface 31 and the optical interface 32 are on the first plane. When the WSS 30 is combined with the rack for use, optical path conversion inside the rack is implemented, to improve flexibility of the solution.

The foregoing describes a case in which the WSS 30 includes one optical interface 32. The following describes a case in which the WSS 30 includes two optical interfaces with reference to the accompanying drawings.

FIG. 7 is a diagram of another structure of a WSS according to an embodiment of this application.

A WSS 30 includes an electrical interface 31, an optical interface 32, and an optical cross-connector 33.

The electrical interface 31 is connected to the optical cross-connector 33 through a circuit. The electrical interface 31 is disposed on a first plane of a backplane 34. The electrical interface 31 is configured to provide electric energy for the optical cross-connector 33. After the WSS 30 is installed onto a rack, the electrical interface 31 is connected to a second plane. The second plane is an electric energy output plane of the rack. The rack provides electric energy for the WSS 30 through the second plane.

The optical interface 32 includes a first optical interface 321 and a second optical interface 322. The first optical interface 321 is connected to the optical cross-connector 33 through an optical fiber. The second optical interface 322 is connected to the optical cross-connector 33 through an optical fiber. The first optical interface 321 is disposed on a third plane of the backplane 34. The second optical interface 322 is disposed on the first plane of the backplane 34.

Optionally, the first optical interface 321 is connected to the second optical interface 322 through an optical fiber.

Specifically, in the WSS 30 shown in FIG. 7, there are a plurality of cases for connection relationships between the first optical interface 321, the second optical interface 322, and the optical cross-connector 33. The following separately describes them with reference to the accompanying drawings.

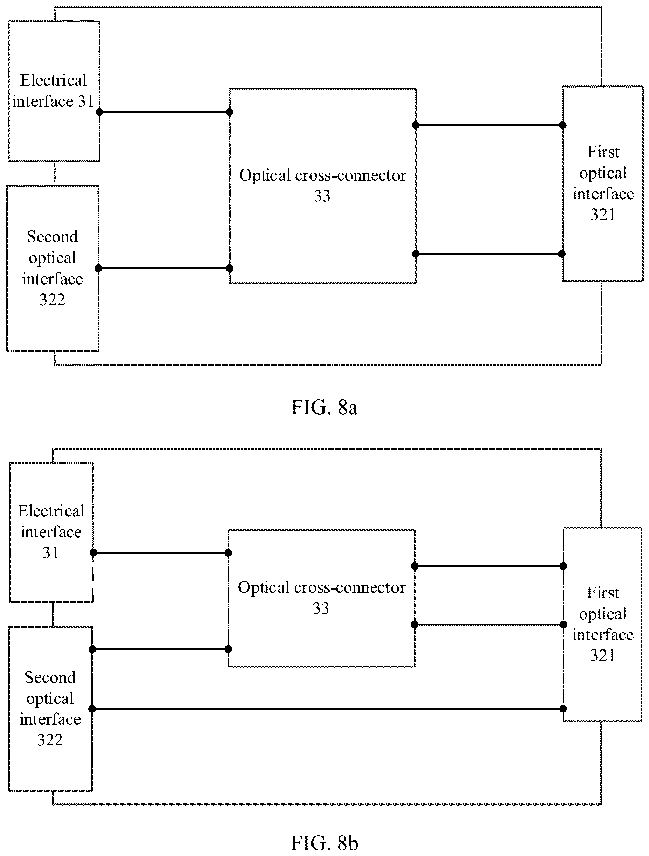

FIG. 8a is a diagram of another structure of a WSS according to an embodiment of this application.

It can be learned from FIG. 8a that the electrical interface 31 is directly connected to the optical cross-connector 33 through a circuit, the first optical interface 321 is connected to the optical cross-connector 33 through two optical fibers, and the second optical interface 322 is connected to the optical cross-connector 33 through an optical fiber. The two optical fibers between the first optical interface 321 and the optical cross-connector 33 are configured to transmit light from the first optical interface 321 to the optical cross-connector 33 and/or transmit light from the optical cross-connector 33 to the first optical interface 321. The optical fiber between the second optical interface 322 and the optical cross-connector 33 is configured to transmit light from the second optical interface 322 to the optical cross-connector 33 for processing or transmit light processed by the optical cross-connector 33 to the second optical interface 322.

In a specific application scenario, the two optical fibers between the first optical interface 321 and the optical cross-connector 33 may both serve as add/drop links for transmitting single-wavelength light. The optical fiber between the second optical interface 322 and the optical cross-connector 33 is a wavelength division multiplexing link for transmitting multi-wavelength multiplexed light.

It may be understood that the description herein of types of the light transmitted by the two optical fibers between the first optical interface 321 and the optical cross-connector 33 and a quantity of optical fibers between the first optical interface 321 and the optical cross-connector 33 is merely an example, and the description of a type of transmission optical path of the optical fiber between the second optical interface 322 and the optical cross-connector 33 and a quantity of optical fibers between the second optical interface 322 and the optical cross-connector 33 is merely an example. In a specific use scenario, there may be two or more optical fibers between the first optical interface 321 and the optical cross-connector 33, and there is at least one optical fiber between the second optical interface 322 and the optical cross-connector 33. These should be set with reference to a specific requirement in a specific case and are not limited herein.

FIG. 8b is a diagram of another structure of a WSS according to an embodiment of this application.

It can be learned from FIG. 8b that the electrical interface 31 is directly connected to the optical cross-connector 33 through a circuit, the first optical interface 321 is connected to the optical cross-connector 33 through two optical fibers, and the second optical interface 322 is connected to the optical cross-connector 33 through an optical fiber. The first optical interface 321 is connected to the second optical interface 322 through one optical fiber. The two optical fibers between the first optical interface 321 and the optical cross-connector 33 are configured to transmit light from the first optical interface 321 to the optical cross-connector 33 and/or transmit light from the optical cross-connector 33 to the first optical interface 321. The optical fiber between the second optical interface 322 and the optical cross-connector 33 transmits light from the second optical interface 322 to the optical cross-connector 33 for processing or transmits light processed by the optical cross-connector 33 to the second optical interface 322. The optical fiber between the first optical interface 321 and the second optical interface 322 may directly transmit light from the first optical interface 321 to the second optical interface 322.

In a specific application scenario, the two optical fibers between the first optical interface 321 and the optical cross-connector 33 may both serve as add/drop links for transmitting single-wavelength light. The optical fiber between the second optical interface 322 and the optical cross-connector 33 is a wavelength division multiplexing link for transmitting multi-wavelength multiplexed light.

It may be understood that the description herein of types of the light transmitted by the two optical fibers between the first optical interface 321 and the optical cross-connector 33 and a quantity of optical fibers between the first optical interface 321 and the optical cross-connector 33 is merely an example, the description of a type of transmission optical path of the optical fiber between the second optical interface 322 and the optical cross-connector 33 and a quantity of optical fibers between the second optical interface 322 and the optical cross-connector 33 is merely an example, and the description of a type of transmission optical path of the optical fiber between the first optical interface 321 and the second optical interface 322 and a quantity of optical fibers between the first optical interface 321 and the second optical interface 322 is merely an example. In a specific use scenario, there may be two or more optical fibers between the first optical interface 321 and the optical cross-connector 33, there is at least one optical fiber between the second optical interface 322 and the optical cross-connector 33, and there is at least one optical fiber between the first optical interface 321 and the second optical interface 322. These should be set with reference to a specific requirement in a specific case and are not limited herein.

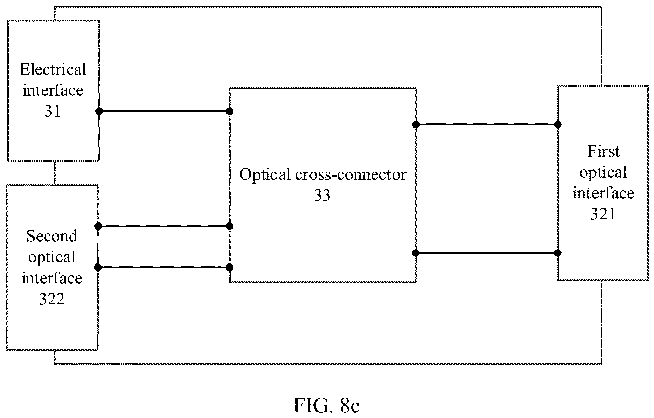

FIG. 8c is a diagram of another structure of a WSS according to an embodiment of this application.

It can be learned from FIG. 8c that the electrical interface 31 is directly connected to the optical cross-connector 33 through a circuit, the first optical interface 321 is connected to the optical cross-connector 33 through two optical fibers, and the second optical interface 322 is connected to the optical cross-connector 33 through two optical fibers. The two optical fibers between the first optical interface 321 and the optical cross-connector 33 are configured to transmit light from the first optical interface 321 to the optical cross-connector 33 and/or transmit light from the optical cross-connector 33 to the first optical interface 321. The two optical fibers between the second optical interface 322 and the optical cross-connector 33 are configured to transmit light from the second optical interface 322 to the optical cross-connector 33 for processing and/or transmit light processed by the optical cross-connector 33 to the second optical interface 322.

In a specific application scenario, the two optical fibers between the first optical interface 321 and the optical cross-connector 33 include a wavelength division multiplexing link and an add/drop link; and the two optical fibers between the second optical interface 322 and the optical cross-connector 33 include a wavelength division multiplexing link and an add/drop link.

In a specific application scenario, the two optical fibers between the first optical interface 321 and the optical cross-connector 33 may alternatively be add/drop links, and the two optical fibers between the second optical interface 322 and the optical cross-connector 33 include a wavelength division multiplexing link and an add/drop link.

It may be understood that the description herein of types of the light transmitted by the two optical fibers between the first optical interface 321 and the optical cross-connector 33 and a quantity of optical fibers between the first optical interface 321 and the optical cross-connector 33 is merely an example, and the description of types of transmission optical paths of the optical fibers between the second optical interface 322 and the optical cross-connector 33 and a quantity of optical fibers between the second optical interface 322 and the optical cross-connector 33 is merely an example. In a specific use scenario, there may be two or more optical fibers between the first optical interface 321 and the optical cross-connector 33, and there may be two or more optical fibers between the second optical interface 322 and the optical cross-connector 33. These should be set with reference to a specific requirement in a specific case and are not limited herein.

It should be noted that a composition of the optical cross-connector 33 in FIG. 7 may be similar to that in FIG. 4c. Details are not described herein again.

The foregoing describes the WSS provided in this application. The following describes a rack provided in this application with reference to the accompanying drawings.

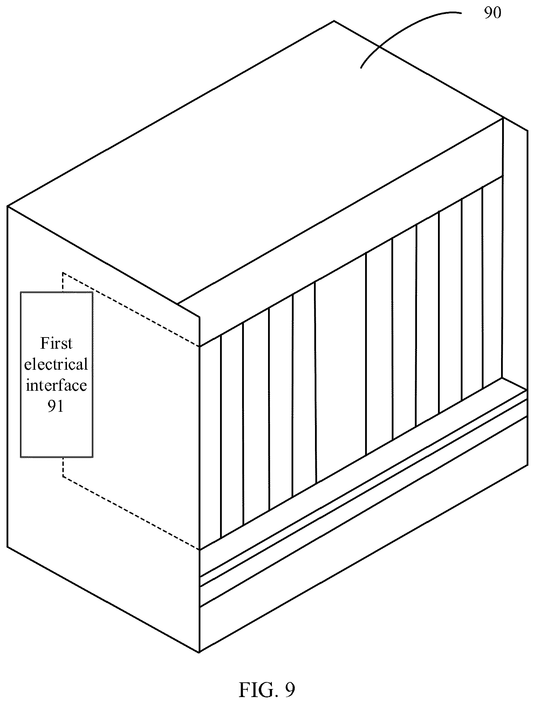

FIG. 9 is a diagram of a structure of a rack according to an embodiment of this application.

A rack 90 includes a first electrical interface 91.

The first electrical interface 91 is disposed on a second plane of the rack 90. The second plane is an electric energy output plane of the rack 90.

A WSS 30 includes an electrical interface 31. The electrical interface 31 is disposed on a first plane of a backplane. After the WSS 30 is installed onto the rack 90, the first electrical interface 91 is connected to the electrical interface 31.

It may be understood that the WSS 30 described in FIG. 9 is similar to the WSS 30 shown in FIG. 3. Details are not described herein again.

Optionally, if the WSS 30 described in FIG. 9 is similar to the WSS 30 shown in FIG. 5, the first electrical interface 91 may be an electrically conductive plane. This is not limited herein.

It may be understood that the description of the rack herein is merely an example. During actual application, the rack 91 may include a board, and the first electrical interface 91 is disposed on the board of the rack 91. This is not limited herein.

Optionally, the rack 90 may further include a third optical interface 92.

The third optical interface 92 is disposed on the second plane of the rack, and is configured to transmit light to an optical interface 32 of the WSS 30.

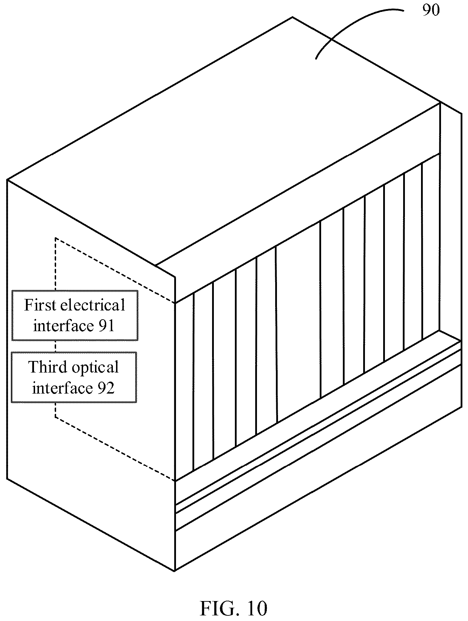

In a specific implementation scenario, for the rack 90 including the third optical interface 92, refer to FIG. 10. FIG. 10 is a diagram of another structure of a rack according to an embodiment of this application.

A rack 90 includes a first electrical interface 91 and a third optical interface 92.

The first electrical interface 91 is disposed on a second plane of the rack 90. The second plane is an electric energy output plane of the rack 90.

The third optical interface 92 is disposed on the second plane of the rack 90, and is configured to transmit light to an optical interface 32 when the WSS 30 is installed onto the rack 90.

The WSS 30 includes an electrical interface 31 and the optical interface 32. The electrical interface 31 is disposed on a first plane of a backplane. After the WSS 30 is installed onto the rack 90, the first electrical interface 91 is connected to the electrical interface 31. The optical interface 32 is disposed on the first plane of the backplane. After the WSS 30 is installed onto the rack 90, the third optical interface 92 is connected to the optical interface 32.

It may be understood that the WSS 30 described in FIG. 10 is similar to the WSS 30 shown in FIG. 6 or FIG. 7. Details are not described herein again.

It may be understood that the description of the rack herein is merely an example. During actual application, the rack 91 may further include a board, and the first electrical interface 91 and the third optical interface 92 are disposed on the board of the rack 91. This is not limited herein.

This application further provides an optical transmission device. The foregoing describes the WSS and the rack provided in this application. The following describes the optical transmission device provided in this application with reference to the accompanying drawings.

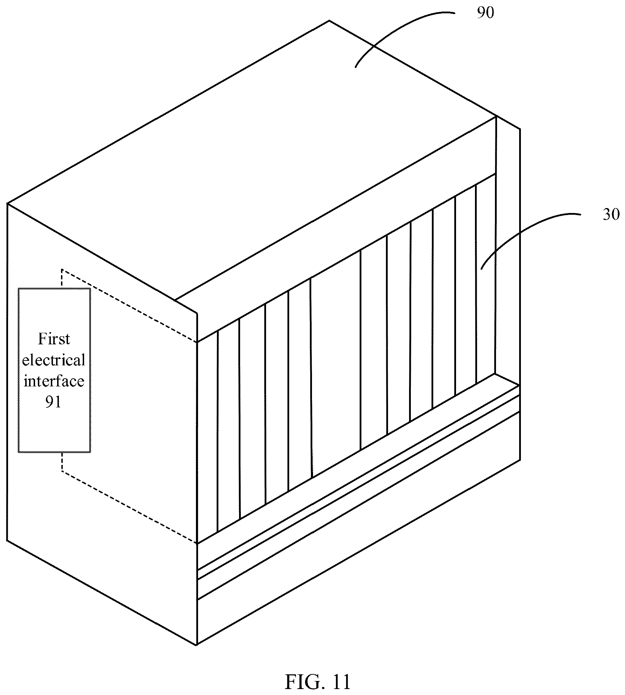

FIG. 11 is a diagram of a structure of an optical transmission device according to an embodiment of this application.

An optical transmission device 110 includes a rack 90 and a WSS 30.

Herein, the rack 90 is similar to the rack 90 shown in FIG. 9, and the WSS 30 is similar to the WSS 30 shown in FIG. 3 or the WSS 30 shown in FIG. 5. Details are not described herein again.

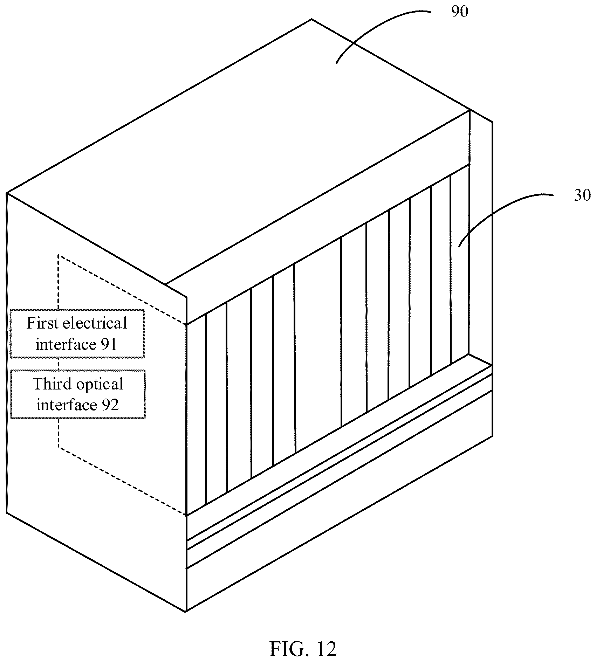

FIG. 12 is a diagram of another structure of an optical transmission device according to an embodiment of this application.

An optical transmission device 110 includes a rack 90 and a WSS 30.

Herein, the rack 90 is similar to the rack 90 shown in FIG. 10, and the WSS 30 is similar to the WSS 30 shown in FIG. 6 or the WSS 30 shown in FIG. 7. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

## Claims

1. A wavelength selective switch WSS, comprising an electrical interface, an optical interface, and an optical cross-connector; wherein
the electrical interface is connected to the optical cross-connector through a circuit, the electrical interface is disposed on a first plane of a backplane, the electrical interface is configured to provide electric energy for the optical cross-connector, the electrical interface is connected to a second plane after the WSS is installed onto a rack, and the second plane is an electric energy output plane of the rack;
the optical interface is connected to the optical cross-connector through an optical fiber, the optical interface is disposed on at least one of the first plane and a third plane, and the third plane is on a surface of the rack after the WSS is installed onto the rack; and
when the WSS is being installed onto the rack, a direction of a motion trajectory of the WSS is perpendicular to the third plane.

2. The WSS according to claim 1, wherein the first plane is not adjacent to the third plane.

3. The WSS according to claim 1 or 2, wherein the optical interface comprises a first optical interface and a second optical interface, the first optical interface is connected to the optical cross-connector through an optical fiber, and the second optical interface is connected to the optical cross-connector through an optical fiber.

4. The WSS according to claim 3, wherein the first optical interface is disposed on the third plane, and the second optical interface is disposed on the first plane.

5. The WSS according to claim 4, wherein the first optical interface is further connected to the second optical interface through an optical fiber.

6. The WSS according to any one of claims 1 to 5, wherein the optical cross-connector comprises at least one of a lens, an optical switching element, and an optical dispersion element.

7. A rack, comprising a first electrical interface; wherein
when a wavelength selective switch WSS is being installed onto the rack, a direction of a motion trajectory of the WSS is perpendicular to a third plane, and the third plane is a plane of the WSS; and
after the WSS is installed onto the rack, the third plane is on a surface of the rack, and the first electrical interface is connected to an electrical interface; the first electrical interface supplies power to the WSS through the electrical interface; and the electrical interface is comprised in the WSS.

8. The rack according to claim 7, wherein the rack further comprises a third optical interface, the third optical interface is disposed on a second plane, the first electrical interface is disposed on the second plane, and the third optical interface is connected to an optical interface of the WSS and is configured to implement optical switching with the WSS.

9. An optical transmission device, comprising a wavelength selective switch WSS and a rack; wherein
the WSS comprises an electrical interface, and the electrical interface is disposed on a first plane of the WSS;
the rack comprises a first electrical interface, the electrical interface is disposed on a second plane, and the second plane is a power supply plane of the rack;
the electrical interface is connected to the first electrical interface, the rack provides electric energy for the WSS through the first electrical interface, a third plane is on a surface of the rack, and the third plane is comprised in the WSS; and
when the WSS is being installed onto the rack, a direction of a motion trajectory of the WSS is perpendicular to the third plane.

10. The device according to claim 9, wherein the WSS further comprises an optical interface and an optical cross-connector;
the electrical interface is connected to the optical cross-connector through a circuit; and
the optical interface is connected to the optical cross-connector through an optical fiber, and the optical interface is disposed on at least one of the first plane and the third plane.

11. The device according to claim 10, wherein the rack further comprises a third optical interface, and the third optical interface is disposed on the second plane of the rack; and
the optical interface is connected to the third optical interface, and the rack implements optical switching with the WSS through the third optical interface.

12. The device according to claim 10, wherein the optical interface comprises a first optical interface and a second optical interface, the first optical interface is connected to the optical cross-connector through an optical fiber, and the second optical interface is connected to the optical cross-connector through an optical fiber.

13. The device according to claim 12, wherein the first optical interface is disposed on the third plane, and the second optical interface is disposed on the first plane.

14. The device according to claim 13, wherein the rack further comprises a third optical interface, and the third optical interface is disposed on the second plane of the rack; and
the first optical interface is connected to the third optical interface, and the rack implements optical switching with the WSS through the third optical interface.

15. The device according to any one of claims 9 to 14, wherein the electrical interface is disposed on the first plane of the WSS, and the first plane is not adjacent to the third plane.

16. The device according to any one of claims 10 to 15, wherein the optical cross-connector comprises at least one of a lens, an optical switching element, and an optical dispersion element.
